# EUROPÄISCHE PATENTSCHRIFT

(11) **EP 3 296 601 B1**
(45) Veröffentlichungstag und Bekanntmachung des Hinweises auf die Patenterteilung: **27.02.2019**
(21) Anmeldenummer: 17001384.1
(22) Anmeldetag: 14.08.2017
(51) Int. Cl.: F16K 11/048, F16K 31/06

(54) **SITZVENTIL MIT ELEKTROMAGNETISCHER BETÄTIGUNG**
SEAT VALVE WITH ELECTROMAGNETIC ACTUATION
ROBINET À SOUPAPE À ACTIONNEMENT ÉLECTROMAGNÉTIQUE

(30) Priorität: 12.09.2016 DE 102016011058
(43) Veröffentlichungstag der Anmeldung: 21.03.2018
(73) Patentinhaber: Thomas Magnete GmbH, 57562 Herdorf (DE)
(72) Erfinder: Petri, Wolfgang, 57290 Neunkirschen (DE); Lütz, Thomas, 57076 Siegen (DE); Pilz, Stefan, 57290 Neunkirchen (DE)

(56) Entgegenhaltungen:
- EP-B1- 2 491 231
- DE-A1- 19 753 575
- DE-A1-102014 217 447

## Beschreibung

Die Erfindung betrifft ein elektromagnetisch betätigtes Sitzventil entsprechend dem Oberbegriff des ersten Patentanspruchs.

### Stand der Technik:

Sitzventile sind bekannt, und auch Sitzventile mit elektromagnetischer Betätigung sind verbreitet. Sie dienen zur Verbindung und Unterbrechung von Fluidströmen in Abhängigkeit von elektrischen Signalen. Im Unterschied zu Schieberventilen bieten sie eine bessere Abdichtung im unterbrochenen Zustand.

Ebenfalls bekannt und verbreitet sind Druckbegrenzungsventile, die bei einer Überschreitung einer vorbestimmten Druckdifferenz zwischen den Drücken des Einlasses und des Auslasses einen Fluidstrom von Einlass zum Auslass zulassen, aber diesen Fluidstrom unterbrechen, wenn die genannte Druckdifferenz nicht erreicht wird.

Bekannt sind auch Dichtungen, die neben ihrer Dichtfunktion auch eine Funktion als Rückschlagventil ausüben können, wenn beispielsweise nachgesaugt werden soll, zum Beispiel bei Luftpumpen und Bremszylindern. Die DE 197 53 575 A1 offenbart ein Magnetventil für eine flüssigkeitsgeregelte Heiz- und/oder Kühlanlage mit einem Ventilgehäuse, das einen Zulaufkanal, einen Ablaufkanal, einen Rücklaufkanal und einen Bypasskanal zwischen dem Zulaufkanal und dem Rücklaufkanal aufweist. Das Magnetventil weist ein elektromagnetisch geschaltetes Ventilglied und Bypassventilglied auf, die zusammen mit einem Anker auf einer Hubstange befestigt sind. Das Ventilglied stellt die Verbindung zwischen dem Zulaufkanal und dem Ablaufkanal her und in einer bestromten Schaltstellung sperrt, während das Bypassventilglied die Verbindung zwischen dem Bypasskanal und dem Rücklaufkanal in der stromlosen Schaltstellung förderstromabhängig steuert und in der bestromten Schaltstellung herstellt. Ein weiteres elektromagnetisch betätigtes Sitzventil entsprechend dem Oberbegriff von Anspruch 1 ist aus EP 2 491 231 B1 bekannt. Wenn mehrere der genannten Funktionen erforderlich sind, müssen üblicherweise mehrere Geräte verwendet werden, die dann mit Rohrleitungen verbunden werden müssen.

### Aufgabe:

Es stellt sich die Aufgaben, die Funktionen des Sitzventils, des Druckbegrenzungsventils und optional auch eines oder mehrerer Rückschlagventile in einem Gerät zu vereinigen. Außerdem soll das Schaltgeräusch der Sitzventilfunktion reduziert werden.

### Lösung:

Die Aufgaben durch die Merkmale des ersten Anspruchs und in Weiterbildungen durch die weiteren Ansprüche gelöst.
Das Sitzventil wird durch einen Elektromagneten betätigt, der in bekannter Weise einen Dichtkörper bewegt und dabei in einen Dichtsitz drückt oder aus einem Dichtsitz drückt. Dabei wirkt der Elektromagnet gegen eine Feder.
Die Funktion des Druckbegrenzungsventils wird erfüllt, indem die genannte Feder einen ersten Dichtkörper in seinen zugeordneten Dichtsitz drückt, solange die Kraft der an dieser Ventilfunktion anliegenden Druckdifferenz die Kraft der Feder nicht überschreitet, und ein Abheben des Dichtkörpers aus dem Dichtsitz zulässt, wenn die Kraft der Druckdifferenz die Kraft der Feder überschreitet.
Die genannte Druckdifferenz besteht zwischen dem Fluid an einem Anschluss P und dem Fluid an einem Anschluss TNC, wobei der Anschluss P dichtkörperseitig und der Anschluss TNC dichtsitzseitig angeordnet sind. Dabei ergibt sich die Kraft der Druckdifferenz aus dem Produkt der Druckdifferenz und der Wirkfläche des Dichtkörpers in seinem Dichtsitz.
Damit die Druckbegrenzungsventilfunktion unabhängig von der Schaltfunktion des Sitzventils erfüllt werden kann, ist der Anker des Elektromagneten nicht dauerhaft mit dem genannten ersten Dichtkörper verbunden, sondern er drückt mittels eines Stößels auf den Dichtkörper, und der Stößel kann von dem Dichtkörper abheben. Zwischen den Fluidanschlüssen, einerseits zwischen P und TNC, andererseits zwischen P und TNO ist jeweils eine Dichtung angeordnet, die einen Kurzschluss durch den Spalt zwischen der Einbaubohrung und der Ventilhülse verhindert.
Hier wird vorteilhafterweise diese Dichtung als Lippendichtung ausgeführt. Sie dichtet wegen ihrer Einbaulage eine positive Druckdifferenz zwischen P und TNC oder zwischen P und TNO ab, aber sie lässt bei einer negativen Druckdifferenz einen geringen Fluidstrom zwischen der Lippe der Dichtung und der Einbaubohrung passieren. Wenn das selten und bei geringer Druckdifferenz geschieht, stellt das keine Gefährdung der Lebensdauer der Dichtung dar.

In einer Weiterbildung der Erfindung weist das Sitzventil einen weiteren Anschluss TNO auf, der im unbestromten Zustand des Elektromagneten mit dem Anschluss P fluidisch verbunden ist.
Der Anker des Elektromagneten wirkt auf einen zweiten Dichtkörper, der ankerseitig von dem ersten Dichtkörper angeordnet ist. Dieser zweite Dichtkörper liegt bei einer Lage des Ankers in der Ruhelage nicht in seinem zugeordneten zweiten Dichtsitz, sondern gibt wegen des Abstands zum Dichtsitz einen Fluidstrom von dem Anschluss P zu einem weiteren Anschluss TNO frei.

Wenn der Elektromagnet von einer elektrischen Steuerung bestromt wird, die unterschiedlich starke Ströme erzeugen kann, können auch unterschiedlich große Kräfte mit dem Elektromagneten erzeugt werden. Dies nutzt man vorteilhafterweise, um gegen die genannte Feder einen Teilhub zu erzeugen, bei dem der erste Dichtkörper von seinem Dichtsitz abgehoben ist, aber der zweite Dichtkörper noch nicht seinen Dichtsitz erreicht.

Die Reduzierung des Schaltgeräusches erfolgt durch zwei Maßnahmen, die sich in vorteilhafter Weite ergänzen:
Erstens wird der Dichtkörper des Sitzventils aus einem Kunststoff hergestellt, der einen erheblich niedrigeren Elastizitätsmodul und eine erheblich höhere Dämpfung aufweist als die für diesen Zweck geeigneten Metallsorten. Damit wird weniger Körperschall in die Stahlbauteile des Sitzventils eingeleitet.

Zweitens bewirkt der Aufbau des Sitzventils, dass der Körperschall auf dem Weg zu den weiteren Bauteilen außerhalb des Sitzventils zwei Grenzen zwischen Materialien mit sehr unterschiedlichen Elastizitätsmodulen überwinden muss, und bei jeder Grenzüberschreitung erheblich gedämpft wird. Dies wird erreicht, indem die Umspritzung und der Befestigungsflansch des Sitzventils aus einem thermoplastischen Kunststoff hergestellt wird, so dass der Körperschall von der Ventilhülse und anderen Bauteilen aus Stahl erst auf den thermoplastischen Kunststoff des Flansches und von dort auf die Befestigungsfläche für das Sitzventil übergeht.
Der Werkstoff für den Dichtkörper muss sehr verschleiß- und temperaturfest sein, daher kommen nur wenige Kunststoffwerkstoffe in Frage. Durch Versuche und aus der Literatur konnte ermittelt werden, dass sich die Werkstoffe
PEEK: Polyetheretherketon
PEI: Polyetherimid
PESU: Polyethersulfon
LCP: Liquid Crystal Polymer
für diese Anwendung eignen. Die Auswahl zwischen diesen Werkstoffen wird man vorteilhafterweise nach den Verarbeitungsbedingungen und den Gesamtkosten für das Sitzventil treffen.

Das Ventil ist vorteilhafterweise als Einbauventil ausgeführt, das in eine Einbaubohrung eingeschoben und mit einem Flansch an einer Befestigungsfläche befestigt ist.

### Anwendung:

Sitzventile der beschriebenen Art werden für hydraulische Bremsanlagen von Fahrzeugen verwendet. Sie können aber auch in Fahrzeuggetrieben oder in hydraulischen Antrieben zum Einsatz kommen.

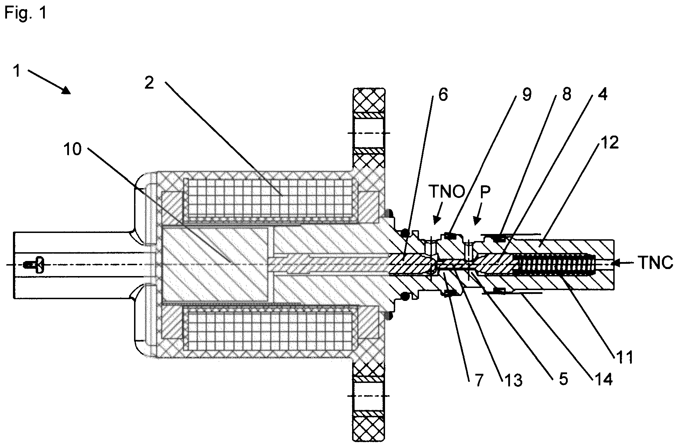

### Bilder: Fig. 1 zeigt ein erfindungsgemäßes Sitzventil mit drei Anschlüssen.

### Beispielhafte Ausführung:

Das von einem Elektromagneten (2) betätigtes Sitzventil (1) gemäß Fig. 1 weist eine Ventilhülse (12) mit mindestens einem Dichtsitz (5), mindestens einen mit einem Anker (10) des Elektromagneten (2) über einen Stößel (14) kraftschlüssig verbundenen ersten Dichtkörper (4) und mindestens zwei Anschlüsse für Fluidströme auf, nämlich die Anschlüsse P und TNC.
In einem unbestromten Zustand des Elektromagneten (2) tritt ein Fluidstrom von P nach TNC nur dann auf, wenn die Druckdifferenz zwischen den Anschlüssen P und TNC einen Grenzwert von Δp_{G} überschreitet.
Dabei überwindet die Kraft der genannten Druckdifferenz die Kraft einer Feder (11) und deshalb wird der erste Dichtkörper (4) aus einem ersten Dichtsitz (5) gedrückt.
In einem bestromten Zustand des Elektromagneten (2) tritt auch bei geringerer Druckdifferenz als Δp_{G} ein Fluidstrom von P nach TNC auf, weil die Kraft des Elektromagneten (2) die Kraft der Feder (11) überwindet, wobei der erste Dichtkörper (4) aus dem ersten Dichtsitz (5) gedrückt wird.

Vorteilhafterweise weist das Sitzventil einen weiteren Anschluss TNO auf, der im unbestromten Zustand des Elektromagneten (2) mit dem Anschluss P fluidisch verbunden ist, aber dann, wenn die Summe aller Kräfte auf einen zweiten Dichtkörper (6) diesen in einen zweiten Dichtsitz (7) drücken, nicht mit dem Anschluss P fluidisch verbunden ist., Dabei wirken die folgenden Kräfte auf den Dichtkörper schließend oder öffnend:
- die Kraft des Elektromagneten (2), schließend,
- die Kraft der Feder (11), öffnend,
- die Kraft der Druckdifferenz zwischen P und TNO, öffnend,
- die Kraft der Druckdifferenz zwischen P und TNC, schließend.

Weiter vorteilhafterweise kann der Anker (10) des Elektromagneten (2) gegen die Kraft der Feder (11) wegen der Fähigkeit einer mit dem Elektromagneten verbundenen elektrischen Ansteuerung, unterschiedliche Ströme zu erzeugen, drei Arbeitslagen einnehmen, nämlich
- eine Ruhelage bei einer Bestromung mit weniger Strom als I1, wobei die Verbindung der Anschlüsse P und TNO immer geöffnet ist und die Verbindung der Anschlüsse P und TNC nur geöffnet wird, wenn die Druckdifferenz zwischen den Anschlüssen P und TNC größer ist als der Grenzwert Δp_{G},
- eine mittlere Lage bei einer Bestromung mit mehr als I1 und weniger als I2, wobei der Anschluss P sowohl mit dem Anschluss TNO als auch mit dem Anschluss TNC verbunden ist, weil die beiden Dichtkörper (4, 6) nicht auf ihren Dichtsitzen (5, 7) aufliegen,
- eine Endlage bei einer Bestromung mit mehr als I2, wobei der Anschluss P nur mit dem Anschluss TNC verbunden ist, weil der Dichtkörper (6) auf seinem Dichtsitz (7) aufliegt und der Dichtkörper (4) von seinem Dichtsitz (5) abgehoben ist.
Dabei beträgt beispielsweise der Strom I1 1,2 A und der Strom I2 1,5 A, bei 1,2 A reicht die Kraft des Elektromagneten aus, um den Dichtkörper (4) von seinem Dichtsitz (5) abzuheben, aber die Kraft reicht noch nicht aus, um die Feder (11) weiter einzudrücken und den Dichtkörper (6) in seinen Dichtsitz (7) zu drücken.

Das Schließen der genannten fluidischen Verbindungen erfolgt vorzugsweise jeweils durch das Anlegen eines ersten oder zweiten Dichtkörpers (4, 6) an einen ersten oder zweiten Dichtsitz (5, 7), wobei die Dichtköper (4, 6) aus einem Kunststoff hergestellt sind, der aus der Gruppe (PEEK, PEI, PESU und LCP) ausgewählt ist.

Die benannten Materialien sind alle für diese Anwendung geeignet, ausgewählt werden sie nach ihrer Verarbeitbarkeit und den Gesamtkosten.

Vorteilhafterweise ist zwischen den Anschlüssen P und TNC eine erste statische aus einem Elastomermaterial hergestellte Dichtung (8), die als Lippendichtung ausgeführt ist, in einer äußeren Nut der Ventilhülse (12) angeordnet. Sie liegt mit ihrer Lippe gegen eine Einbaubohrung (13) an, wenn die Dichtung abdichtet. Wenn der Druck am Anschluss TNC den Druck am Anschluss P überschreitet, verliert die Dichtung (8) ihre Dichtfunktion, weil die Druckdifferenz die Lippe der Dichtung von der Einbaubohrung abhebt, und es wird ein Fluidstrom vom Anschluss TNC zum Anschluss P freigegeben.

Ebenfalls vorteilhafterweise ist auch zwischen den Anschlüssen P und TNO eine zweite statische aus einem Elastomermaterial hergestellte Dichtung (8), die als Lippendichtung ausgeführt ist, in einer äußeren Nut der Ventilhülse (12) angeordnet. Sie liegt mit ihrer Lippe gegen die Einbaubohrung (13) an, wenn die Dichtung abdichtet. Wenn der Druck am Anschluss TNO den Druck am Anschluss P überschreitet, verliert die Dichtung (8) ihre Dichtfunktion, weil die Druckdifferenz die Lippe der Dichtung von der Einbaubohrung abhebt, und es wird ein Fluidstrom vom Anschluss TNO zum Anschluss P freigegeben.

### Liste der Bezugszeichen

- 1.: Sitzventil
- 2.: Elektromagnet
- 4.: Erster Dichtkörper
- 5.: Erster Dichtsitz
- 6.: Zweiter Dichtkörper
- 7.: Zweiter Dichtsitz
- 8.: Dichtung
- 9.: Dichtung
- 10.: Anker
- 11.: Feder
- 12.: Ventilhülse
- 13.: Einbaubohrung
- 14.: Stößel
- P: Anschluss für Fluidstrom zum Bremszylinder
- TNO: Anschluss für Fluidstrom zum Verbraucher
- TNC: Anschluss für Fluidstrom zum Druckspeicher
- I1: unterer Grenzwert für den elektrischen Strom
- I2: oberer Grenzwert für den elektrischen Strom
- Δp_{G}: Grenzwert für die Druckdifferenz

## Patentansprüche

1. Ein von einem Elektromagneten (2) betätigtes Sitzventil (1) weist eine Ventilhülse (12) mit mindestens einem Dichtsitz (5), mindestens einen mit einem Anker (10) des Elektromagneten (2) kraftschlüssig verbundenen ersten Dichtkörper (4) und mindestens zwei Anschlüsse für Fluidströme auf, nämlich die Anschlüsse P und TNC wobei in unbestromtem Zustand des Elektromagneten (2) ein Fluidstrom von P nach TNC nur dann auftritt, wenn die Druckdifferenz zwischen den Anschlüssen P und TNC einen Grenzwert von Δp_{G} überschreitet, wobei die Kraft der genannten Druckdifferenz die Kraft einer Feder (11) überwindet und deshalb den ersten Dichtkörper (4) aus einem ersten Dichtsitz (5) drückt,
und dass im bestromten Zustand des Elektromagneten (2) auch bei geringerer Druckdifferenz als Δp_{G} ein Fluidstrom von P nach TNC auftritt, wenn die Kraft des Elektromagneten (2) gemeinsam mit der Kraft der Druckdifferenz zwischen den Anschlüssen P und TNC die Kraft der Feder (11) überwindet, wobei die Summe der genannten Kräfte den ersten Dichtkörper (4) aus dem ersten Dichtsitz (5) drückt,
und dass kein Fluidstrom von P nach TNC auftritt, wenn die Kraft der Feder (11) die Summe der Kräfte der Druckdifferenz von P nach TNC und des Elektromagneten (2) übertrifft, weil dann der Dichtkörper (4) in seinem ersten Dichtsitz (5) abdichtet, **dadurch gekennzeichnet, dass** zwischen den Anschlüssen P und TNC eine erste aus einem Elastomermaterial hergestellte Dichtung (8), die als Lippendichtung ausgeführt ist, in einer äußeren Nut der Ventilhülse (12) angeordnet ist und bei ihrer Dichtfunktion mit ihrer Lippe gegen eine Einbaubohrung (13) anliegt, wobei die Dichtung (8), wenn der Druck am Anschluss TNC den Druck am Anschluss P überschreitet, ihre Dichtfunktion verliert und einen Fluidstrom vom Anschluss TNC zum Anschluss P freigibt, weil die genannte Lippe von der Einbaubohrung (13) abhebt und/oder dass das Sitzventil (1) einen weiteren Anschluss TNO aufweist, der im unbestromten Zustand des Elektromagneten (2) mit dem Anschluss P fluidisch verbunden ist, aber dann, wenn die Summe aller Kräfte auf einen zweiten Dichtkörper (6) diesen in einen zweiten Dichtsitz (7) drücken, nicht mit dem Anschluss P fluidisch verbunden ist, wobei die folgenden Kräfte auf den Dichtkörper schließend oder öffnend wirken:
• die Kraft des Elektromagneten (2), schließend,
• die Kraft der Feder (11), öffnend,
• die Kraft der Druckdifferenz zwischen P und TNO, öffnend,
• die Kraft der Druckdifferenz zwischen P und TNC, schließend und dass zwischen den Anschlüssen P und TNO eine zweite aus einem Elastomermaterial hergestellte Dichtung (9), die als Lippendichtung ausgeführt ist, in einer zweiten äußeren Nut an der Ventilhülse (12) angeordnet ist und bei ihrer Dichtfunktion mit ihrer Lippe gegen die Einbaubohrung (13) anliegt, wobei die Dichtung (9), wenn der Druck am Anschluss TNO den Druck am Anschluss P überschreitet, ihre Dichtfunktion verliert und einen Fluidstrom vom Anschluss TNO zum Anschluss P freigibt, weil die genannte Lippe von der Einbaubohrung (13) abhebt.

2. Sitzventil nach Anspruch 1, **dadurch gekennzeichnet, dass** der Anker (10) des Elektromagneten (2) gegen die Kraft der Feder (11) wegen der Fähigkeit einer mit dem Elektromagneten verbundenen elektrischen Ansteuerung, unterschiedliche Ströme zu erzeugen, drei Arbeitslagen einnehmen kann, nämlich
• eine Ruhelage bei einer Bestromung des Elektromagneten (2) mit weniger Strom als I1, wodurch wegen der Kraft der Feder (11) die Verbindung der Anschlüsse P und TNO immer geöffnet ist und die Verbindung der Anschlüsse P und TNC nur durch die Kraft der Druckdifferenz zwischen den Anschlüssen P und TNC geöffnet wird, wenn die genannte Druckdifferenz größer ist als der Grenzwert Δp_{G},
• eine mittlere Lage bei einer Bestromung des Elektromagneten (2) mit mehr Strom als I1 und weniger als I2, bei der die Kräfte des Elektromagneten (2), der Feder (11), und der Druckdifferenzen zwischen T und TNO sowie zwischen P und TNC im Gleichgewicht sind, wobei der Anschluss P sowohl mit dem Anschluss TNO als auch mit dem Anschluss TNC verbunden ist, weil die beiden Dichtkörper (4, 6) nicht auf ihren Dichtsitzen (5, 7) aufliegen,
• eine Endlage bei einer Bestromung des Elektromagneten (2) mit mehr Strom als I2, wobei der Anschluss P nur mit dem Anschluss TNC, aber nicht mit dem Anschluss TNO verbunden ist, weil der zweite Dichtkörper (6) auf seinem Dichtsitz (7) aufliegt, während der erste Dichtkörper (4) von seinem Dichtsitz (5) abgehoben ist.

3. Sitzventil nach einem der Ansprüche 1 bis 2, **dadurch gekennzeichnet, dass** das Schließen der genannten fluidischen Verbindungen jeweils durch das Anlegen eines ersten oder zweiten Dichtkörpers (4, 6) an einen ersten oder zweiten Dichtsitz (5, 7) erfolgt, wobei die Dichtköper (4, 6) aus einem Kunststoff hergestellt sind, der aus der Gruppe (PEEK, PEI, PESU und LCP) ausgewählt ist.

## Claims

1. A seat valve (1) actuated by an electromagnet (2) has a valve sleeve (12) with at least one sealing seat (5), has at least one first sealing body (4) connected in a force-fitting mannerto an armature (10) of the electromagnet (2), and has at least two ports, namely the ports P and TNC, for fluid flows,
wherein
in a de-energized state of the electromagnet (2), a fluid flow from P to TNC occurs only if the pressure difference between the ports P and TNC exceeds a limit value of Δp_{G}, wherein the force of the specified pressure difference overcomes the force of a spring (11) and therefore pushes the first sealing body (4) out of a first sealing seat (5),
and in that in the energized state of the electromagnet (2), a fluid flow from P to TNC occurs even in the case of a pressure difference less than Δp_{G} if the force of the electromagnet (2) together with the force of the pressure difference between the ports P and TNC overcomes the force of the spring (11), wherein the sum of the specified forces pushes the first sealing body (4) out of the first sealing seat (5),
and in that no fluid flow from P to TNC occurs if the force of the spring (11) exceeds the sum of the forces of the pressure difference from P to TNC and of the electromagnet (2), because then the sealing body (4) seals off in its first sealing seat (5), **characterized in that**, between the ports P and TNC, a first seal (8), which is produced from an elastomer material and which is designed as a lip seal, is arranged in an outer groove of the valve sleeve (12), and the lip of said first seal, when the sealing function of the latter is being applied, bears against an installation bore (13), wherein, if the pressure at the port TNC exceeds the pressure at the port P, the seal (8) loses its sealing function and opens up a fluid flow from the port TNC to the port P because the specified lip lifts off from the installation bore (13), and/or **in that** the seat valve (1) has a further port TNO which, in the de-energized state of the electromagnet (2), is fluidically connected to the port P but, if the sum of all the forces on a second sealing body (6) pushes said body into a second sealing seat (7), is not fluidically connected to the port P, wherein the following forces have a closing action or an opening action on the sealing body:
• the force of the electromagnet (2), closing,
• the force of the spring (11), opening,
• the force of the pressure difference between P and TNO, opening,
• the force of the pressure difference between P and TNC, closing,
and **in that**, between the ports P and TNO, a second seal (9), which is produced from an elastomer material and which is designed as a lip seal, is arranged in a second outer groove on the valve sleeve (12), and the lip of said second seal, when the sealing function of the latter is being applied, bears against an installation bore (13), wherein, if the pressure at the port TNO exceeds the pressure at the port P, the seal (9) loses its sealing function and opens up a fluid flow from the port TNO to the port P because the specified lip lifts off from the installation bore (13).

2. Seat valve according to Claim 1, **characterized in that**, owing to the ability of an electrical controller, connected to the electromagnet, to generate different currents, the armature (10) of the electromagnet (2) is able to assume three working positions counter to the force of the spring (11), namely
• a rest position, when the electromagnet (2) is energized with less current than I1, whereby, owing to the force of the spring (11), the connection of the ports P and TNO is always open, and the connection of the ports P and TNC is opened only by the force of the pressure difference between the ports P and TNC, if the specified pressure difference is greater than the limit value Δp_{G},
• an intermediate position, when the electromagnet (2) is energized with more current than I1 and less current than 12, in which the forces of the electromagnet (2), of the spring (11), and of the pressure difference between T and TNO and between P and TNC are in equilibrium, wherein the port P is connected both to the port TNO and to the port TNC because the two sealing bodies (4, 6) do not bear on their sealing seats (5, 7),
• an end position, when the electromagnet (2) is energized with more current than 12, wherein the port P is connected only to the port TNC but not to the port TNO because the second sealing body (6) bears on its sealing seat (7) while the first sealing body (4) is lifted off from its sealing seat (5).

3. Seat valve according to either of Claims 1 and 2, **characterized in that** the closure of the specified fluidic connections is in each case realized by the placement of a first or a second sealing body (4, 6) against a first or a second sealing seat (5, 7), wherein the sealing bodies (4, 6) are produced from a plastic which is selected from the group (PEEK, PEI, PESU and LCP).

## Revendications

1. Soupape à siège (1) actionnée par un électroaimant (2), présentant une douille de soupape (12) avec au moins un siège d'étanchéité (5), au moins un premier corps d'étanchéité (4) connecté par engagement par force à un induit (10) de l'électroaimant (2) et au moins deux raccords pour des écoulements fluidiques, à savoir les raccords P et TNC, un courant fluidique de P vers TNC se produisant, dans l'état non alimenté en courant de l'électroaimant (2), seulement lorsque la différence de pression entre les raccords P et TNC dépasse une valeur limite de Δp_{G}, la force de ladite différence de pression surmontant la force d'un ressort (11) et pressant ainsi le premier corps d'étanchéité (4) hors d'un premier siège d'étanchéité (5),
et, en ce que dans l'état alimenté en courant de l'électroaimant (2), également en cas de plus faible différence de pression que Δp_{G}, un courant fluidique de P vers TNC se produit lorsque la force de l'électroaimant (2) conjointement avec la force de la différence de pression entre les raccords P et TNC surmonte la force du ressort (11), la somme desdites forces pressant le premier corps de pression (4) hors du premier siège d'étanchéité (5),
et en ce que'aucun courant fluidique de P vers TNC ne se produit lorsque la force du ressort (11) dépasse la somme des forces de la différence de pression de P vers TNC et de l'électroaimant (2), parce que dans ce cas le corps d'étanchéité (4) réalise l'étanchéité dans son premier siège d'étanchéité (5), **caractérisée en ce qu'**entre les raccords P et TNC, un premier joint d'étanchéité (8) réalisé en matériau élastomère, qui est réalisé en tant que joint d'étanchéité à lèvre, est disposé dans une rainure extérieure de la douille de soupape (12), et, dans le cadre de sa fonction d'étanchéité, s'applique avec sa lèvre contre un alésage d'installation (13), le joint d'étanchéité (8), lorsque la pression au niveau du raccord TNC dépasse la pression au niveau du raccord P, perdant sa fonction d'étanchéité et libérant un courant fluidique du raccord TNC vers le raccord P, parce que ladite lèvre se soulève de l'alésage d'installation (13) et/ou **en ce que** la soupape à siège (1) présente un raccord supplémentaire TNO qui, dans l'état non alimenté en courant de l'électroaimant (2), est connecté fluidiquement au raccord P, mais qui n'est pas connecté fluidiquement au raccord P lorsque la somme de toutes les forces appliquées à un deuxième corps d'étanchéité (6) presse celui-ci dans un deuxième siège d'étanchéité (7), les forces suivantes agissant sur le corps d'étanchéité pour le fermer ou pour l'ouvrir :
- la force de l'électroaimant (2), pour la fermeture,
- la force du ressort (11), pour l'ouverture,
- la force de la différence de pression entre P et TNO, pour l'ouverture,
- la force de la différence de pression entre P et TNC, pour la fermeture et **en ce qu'**entre les raccords P et TNO, un deuxième joint d'étanchéité (9) réalisé en un matériau élastomère, qui est réalisé sous forme de joint d'étanchéité à lèvre, est disposé dans une deuxième rainure extérieure au niveau de la douille de soupape (12), et, dans le cadre de sa fonction d'étanchéité, s'applique avec sa lèvre contre l'alésage d'installation (13), le joint d'étanchéité (9), lorsque la pression au niveau du raccord TNO dépasse la pression au niveau du raccord P, perdant sa fonction d'étanchéité et libérant un écoulement fluidique depuis le raccord TNO vers le raccord P, car ladite lèvre se soulève de l'alésage d'installation (13).

2. Soupape à siège selon la revendication 1, **caractérisée en ce que** l'induit (10) de l'électroaimant (2) peut adopter à l'encontre de la force du ressort (11), du fait de la capacité d'une commande électrique connectée à l'électroaimant à générer des courants différents, trois positions de travail, à savoir :
- une position de repos lors d'une alimentation électrique de l'électroaimant (2) avec un courant inférieur à I1, de sorte qu'en raison de la force du ressort (11), la connexion des raccords P et TNO soit toujours ouverte et que la connexion des raccords P et TNC soit ouverte seulement par la force de la différence de pression entre les raccords P et TNC, lorsque ladite différence de pression est supérieure à la valeur limite Δp_{G},
- une position centrale lors d'une alimentation électrique de l'électroaimant (2) avec un courant supérieur à I1 et inférieur à I2, à laquelle les forces de l'électroaimant (2), du ressort (11) et des différences de pression entre T et TNO ainsi qu'entre P et TNC sont en équilibre, le raccord P étant connecté au raccord TNO ainsi qu'au raccord TNC, parce que les deux corps d'étanchéité (4, 6) ne reposent pas sur leurs sièges d'étanchéité (5, 7),
- une position de fin de course dans le cas d'une alimentation électrique de l'électroaimant (2) avec un courant supérieur à I2, le raccord P étant connecté seulement au raccord TNC, mais n'étant pas connecté au raccord TNO, parce que le deuxième corps d'étanchéité (6) repose sur son siège d'étanchéité (7), tandis que le premier corps d'étanchéité (4) est soulevé de son siège d'étanchéité (5).

3. Soupape à siège selon l'une quelconque des revendications 1 à 2, **caractérisée en ce que** la fermeture desdites connexions fluidiques s'effectue à chaque fois par l'application d'un premier ou d'un deuxième corps d'étanchéité (4, 6) contre un premier ou un deuxième siège d'étanchéité (5, 7), les corps d'étanchéité (4, 6) étant fabriqués en un plastique choisi parmi le groupe (PEEK, PEI, PESU et LCP).
